# EUROPEAN PATENT SPECIFICATION

(11) **EP 0 783 629 B1**
(45) Date of publication and mention of the grant of the patent: **28.02.2001**
(21) Application number: 95930404.9
(22) Date of filing: 07.09.1995
(51) Int. Cl.: F03D 11/00, H02G 13/00

(54) **LIGHTNING ARRESTER FOR WINDMILL BLADES**
BLITZABLEITER FÜR WINDMÜHLENFLÜGEL
PARAFOUDRE POUR AILES DE MOULIN A VENT

(30) Priority: 07.09.1994 DK 34394 U
(43) Date of publication of application: 16.07.1997
(73) Proprietor: BONUS ENERGY A/S, 7330 Brande (DK)
(72) Inventor: STIESDAL, Henrik, DK-5000 Odense C (DK)
(74) Representative: Nielsen, Leif
(86) International application number: DK9500358
(87) International publication number: WO9607825

(56) References cited:
- SE-B- 429 279

## Description

### BACKGROUND OF THE INVENTION

The invention concerns a lightning arrester arrangement for mounting in a windmill blade of composite material, said arrangement consisting of an electrically-conducting material being connected to an earth connection, and the said connection comprising a metallic conductor which extends inside the blade, and which wholly or partly consists of a metal wire.

A number of known techniques are used in the normal protection of constructions against lightning. The most used technique comprises an earthed cage around the construction it is desired to protect. In a more simplified form, the lightning arrester can be reduced to an earthed conductor which extends over the highest part of the construction, and said conductor can possibly be provided with one or more vertical projections.

A traditional lightning arrester of this type is, however, difficult to establish on, for example, a windmill, where the highest point is the blade, which from the point of view of security is desired to be protected against a stroke of lightning. The technique is complicated in comparison with stationary constructions, in that the part of the construction which it is desired to protect is movable. This means that a possible stroke of lightning is not so well-defined or predictable, and it is herewith difficult to prevent or to lead away. Moreover, in connection with windmill blades struck by lightning, there is a great risk that the blade will suffer damage. This necessitates timeconsuming repairs, in that a possible replacement or repair of a windmill blade is complicated.

In connection with composite materials, of which windmill blades are typically made, lightning conductor arrangements are known in the form of metal foil or wire laminated into or affixed by adhesive to the blade. Such lightning arrester arrangements are most often based on conductors which are placed on or in the surface of the blade. Normally, it is thus the intention to create a metallic net around the inner structure of the blade in order to create a combined longitudinal lightning arrester and conductor along the rear edge of the blade. However, it is common to all these arrangements that it is difficult to achieve the necessary cross-sectional area without hereby giving rise to undesired aerodynamic effects, for example in the form of noise and/or reduced efficiency. Furthermore, it can prove problematic to get a metallic material to maintain the level of tension in a blade of composite material, in that the level of tension in a blade of composite material will normally be higher than the permissible fatigue influence for a metallic material, and it will therefore require special arrangements to avoid fatigue cracks. Without the necessary cross-sectional area, it can be necessary to repair the lightning arrester arrangement after influence by lightning.

WO 84/01673 describes an overvoltage protector in a wind mill having a vertical axis of rotation. The overvoltage protector of this windmill is making use of the very great reduction of electrical potentials that occurs when the electrical potentials are discharged as a spark. The windmill blades and the axle to which the blades are attached are provided with a moving part in the shape of a disc having projections rotating around a ring, which ring is attached to the rest of the construction of the windmill. Between the projections of the disc and the ring a small discharge gap is provided. When overvoltage in the form of a lightning strikes the windmill blades or the axle to which they are attached the electrical potentials will try to neutralize by seeking towards the ground through the rest of the construction of the windmill. In doing so the electrical potential has to pass the discharge gap between the projection of the disc and the ring attached to the rest of the windmill. When passing the discharge gap as a spark the electrical potential is reduced to a value that eliminates any destruction of further parts of the rest of the construction of the windmills or any persons in the vicinity of the rest of the construction of the windmill.

The overvoltage protector of this kind has the advantage of being very simple to produce. However, due to the fact that the discharge of the electrical potential is by means of a spark running in a discharge gap then the certainty of the electrical potential being reduced is somewhat limited. If the overvoltage is of a reduced value then a spark may not project at all in the discharge gap and accordingly it will be dangerous to be in vicinity of the windmill blades or the axle to which they are attached. This may be extremely dangerous if personnel is entering the rest of the construction of the windmill in order to service the windmill. On the other hand, if the overvoltage is of an extremely high value then the spark running in the discharge gap may be very big or there may be many sparks running through the gap. This may cause either an extreme risk of fire getting started in the rest of the windmill or an extremely overheating of the bearings or other parts of the windmill may occur. It will not be possible to regulate the discharge gap so that all kinds of possible lightnings will be transmitted through the gap without the above-mentioned risks of either no spark running at all and thereby maintaining the windmill blades and the axle electrically charged compared to the rest of the windmill, or the risk of several sparks running in the gap causing overheating or fire. Furthermore, if the windmill blades are made of a resin material then severe damages may occur to the windmill blades, because they are the ones to conduct the electrical potential to the projection of the disc.

DE 44 45 899 describes a lightning arrester which overcomes the last mentioned disadvantage of the above-mentioned prior art. A number of conductive wires run along the inside of the windmill blades. The conductive wires mount into the rotational axle of the windmill blades, and to a disc rotating along with the axle. From the disc the overvoltage is conducted to a plate mounted underneath the head of the windmill. The plate is electrically insulated from the head of the windmill. From this plate the overvoltage is led to a discharge gap between the plate and the windmill tower. The contact between the disc rotating with the axle of the windmill blades and the plate is obtained by the disc sliding along a curvature provided in the plate.

This technique has the same disadvantages as the above-mentioned prior art, apart from the fact that the windmill blades themselves are not conducting the electrical potential, as this is done by the number of conductive wires. However, it is necessary for the electrical potential from the lightning to enter from the surface of the blades to the interior, where the conductive wires are running. Accordingly, there may still occur some damage of the windmill blades. Also, the fact of having conductive wires running in the blades highly increases the risk of lightning striking the blades. However, apart from the disadvantages of having a discharge gap provided in order to reduce the value of the electrical potential then the fact that the electrical potential has to be guided from the disc to the plate through the curvature involves a further risk of malfunction. When the disc rotates with its edge along the curvature of the plate an extremely high degree of wear will occur. This means that the contact between the edge of the disc and the curvature of the plate will be reduced and perhaps in time being non-existent due to excessive wear. This means that the specific construction of the contact between the edge of the disc and the curvature of the plate must be serviced very often. If not properly there will be no prediction of how the lightning arrester of this construction will function or if it will function at all.

Experiences from strokes of lightning in windmill blades with rotatable tips have moreover shown that the lightning conduction normally extends through the wires which regulate the tip, since these are connected to earth.

However, this type of lightning arrester embodiment is encumbered with a great uncertainty and security risk, the reason being that the metal parts are not always directly accessible for the lightning current.

Where composite materials are involved, such as carbon fibre as construction material for tip axles on which the tip can rotate, the lightning will not be able to pass through without the material being heated to such a degree that a risk arises of damage to the blade.

### Advantages of the invention

With an arrangement disclosed in the characterizing part of claim 1, a hitherto-unknown secure lightning protection of a windmill blade is achieved without the risk of the windmill blade itself being damaged by the lightning. By letting the connection between the outwardly extending conductor(s) in the tip and earth comprise the metallic conductor which extends inside the blade with or without insulating cladding, there will in a secure way be obtained a well-defined stroke of lightning in the outwardly extending conductor(s), thereby making it possible to lead it away through the inner connection to the earth.

It has thus shown that strokes of lightning, which most often occur at the tip of the blade, will be conducted to earth through the wire. By hereby allowing the inner conductor to extend inside the blade, disadvantages from the point of view of blade strength and of an aerodynamic and acoustic nature are avoided.

Moreover, for blades having a rotatable tip the wire will contribute towards the safe securing of the blade's tip to the blade.

With blades having a rotatable tip, where as disclosed in claim 2 a tip axle of composite material is used, it is expedient to make the axle hollow and to let the inner conductor extend inside the cavity. In a surprisingly simple manner, the lightning is conducted through the axle without any risk of the axle or its surroundings being influenced by heat, and therefore there is no need for other electrical conductors which can lead the current around the axle.

As disclosed in claim 3, by letting the inner conductor consist wholly or partly of an electrically-conducting tip axle, it is achieved that the lightning arrester arrangement can be used for known systems with metal tip axles without any great reconstruction and adaptation of the technique.

Finally, as disclosed in claim 4, it is expedient to be able to subsequently mount the lightning arrester on blades with rotatable tips, and with metallic tip axles, by connecting the tip axle to a metal wire which is mounted inside the blade and earthed.

### The drawing

In the following section, example embodiments of the invention will be described in more detail with reference to the drawing, where
- fig. 1: shows a known windmill with rotatable tips,
- fig. 2: shows an embodiment of a blade with fixed tip,
- fig. 3: shows a cross-section of the blade seen in the direction III-III in fig. 2,
- fig. 4: shows a further embodiment of a blade with rotatable tip, and
- fig. 5: shows yet a further embodiment of a blade with rotatable tip.

### Description of the example embodiments

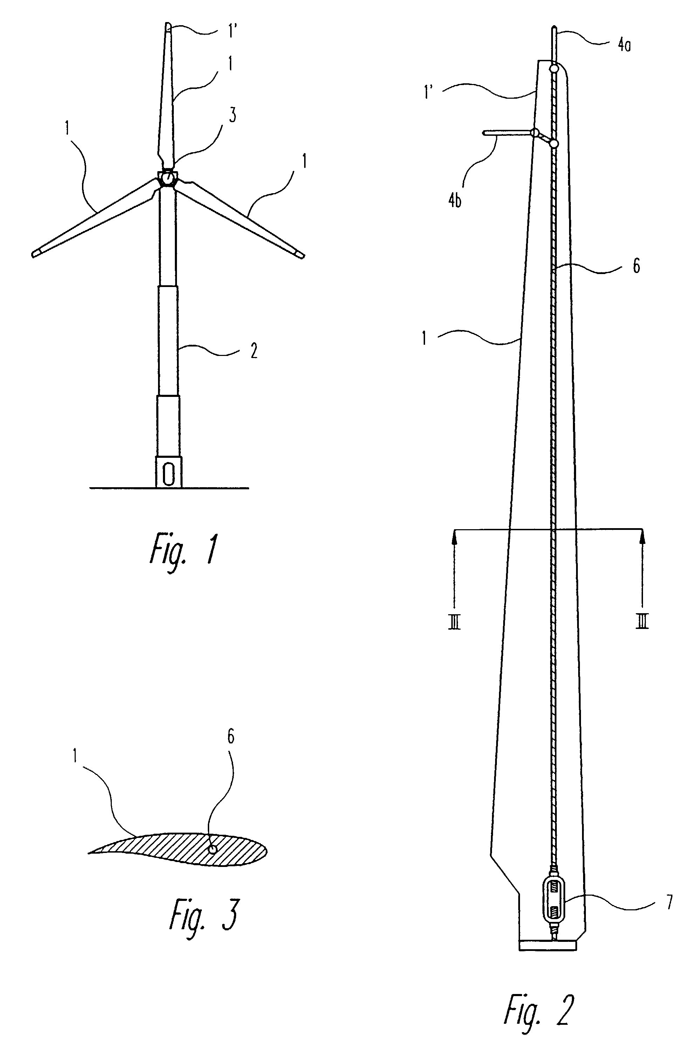

In fig. 1 is seen an ordinary windmill, where the windmill blades 1 are suspended in a mill hub 3, which in turn is anchored on a tower 2.

In fig. 2 is seen an embodiment according to the invention, where two lightning conductors 4a, 4b, which consist of an electrically-conducting material, are connected to an inner conductor 6 consisting of a steel wire. The inner conductor 6 is anchored to and electrically connected with the mill hub 3 (not shown. In the shown embodiment, there are mounted two lightning conductors 4a and 4b which project out from the tip of the windmill blade 1.

In fig. 3 is seen a cross-section of the windmill blade 1 in fig. 2 seen in the direction III-III, where the inner conductor 6 is seen to extend in the vicinity of the neutral axis of the blade.

The two lightning conductors 4a, 4b placed at the tip of the blade 1 will be sufficient to protect the whole of the windmill blade 1, in that experience has shown that lightning most often strikes at the tip of the blade. When the blade is struck, the lightning will thus flow from the lightning conductors 4a, 4b via the inner conductor 6 towards the mill hub 3 (not shown) . From the mill hub 3 the lightning will be conducted further towards earth. The result of the inner conductor 6 being thus placed is that the blade will retain its original strength and dynamic characteristics, combined with an effective earthing of the lightning.

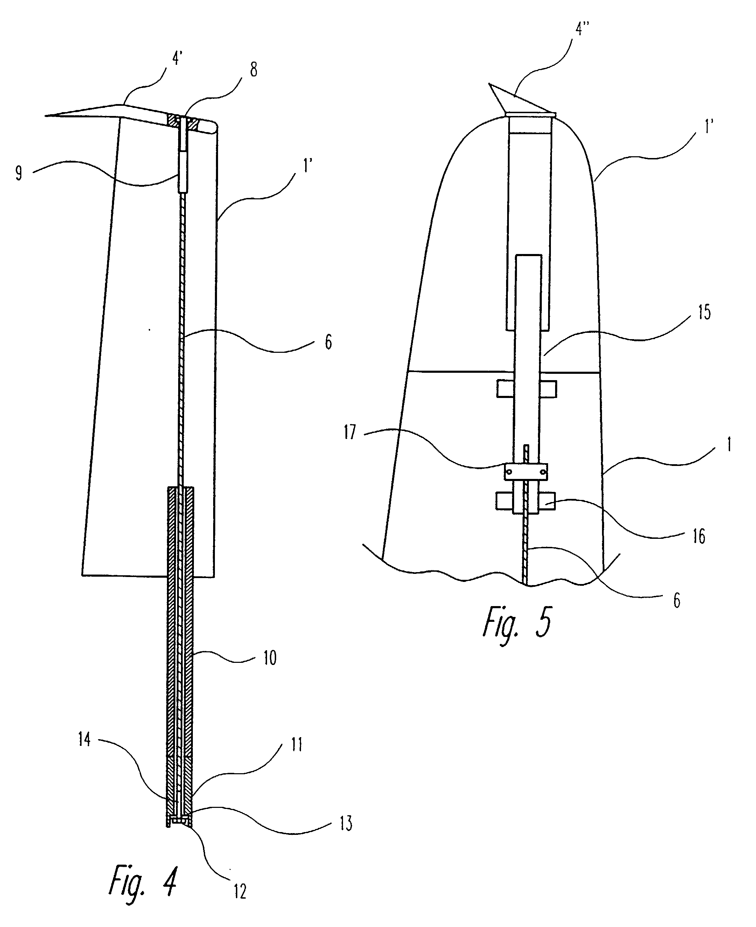

In fig. 4 is seen a further embodiment for a blade with rotatable tip 1' which is arranged on a tip axle 10 of composite material. A lightning conductor 4' consisting of a metal rod extends to form a point towards its rear edge. The lightning conductor 4' is connected via a hole 8 and a terminal 9 to a blade tip 1' with an inner conductor. The inner conductor 6 extends towards the hub of the mill inside a cavity in the tip axle 10, said tip axle 10 being secured in the blade 1. The tip axle 10 is connected by a terminal 14 to a guide 11 by means of a lock-washer 13 and a nut 12, and said guide 11 is connected with a steel wire 6 indicated by a stippled line to the mill hub and from here to earth.

The actual earthing of the lightning with the embodiment shown in fig. 4 will take place in exactly the same way as the system shown in fig. 2, in that the lightning will flow from the lightning conductor 4' via the inner conductor 6 in towards an earth connection at the root of the blade. There is hereby ensured a permanent and effective electrical conduction of the lightning to earth, and the lightning can be transferred without any damage to either the tip or its suspension or the rest of the blade.

The streamlined configuration of the lightning conductor 4' contributes towards giving the blade a further advantage, in that a blade 1 configured with this streamlined lightning conductor in the tip of the blade gives the blade an improved efficiency and a smaller emission of noise.

The inner conductor 6 also serves to secure the rotatable tip 1' to the blade 1 itself.

In connection with the protection of a windmill blade 1 with rotatable tip 1', the invention is particularly advantageous in that the protection is implemented in the tip 1' of the blade, and in that the earthing takes place via an inner conductor 6 which extends inside the tip axle 10. A possible stroke of lightning can thus be earthed by the inner conductor 6, regardless of whether or not the rotatable tip 1' is rotated.

In fig. 5 is seen a further embodiment for a blade with rotatable tip. A lightning conductor 4'' is mounted in the tip of a rotatable blade tip 1' which is provided with a guide tube 18 which is connected to a tip axle 15, these parts preferably being made of stainless steel.

The tip axle 15 is secured to the blade 1, in that it is provided with a pair of brackets 16 laminated into the blade.

An inner conductor 6, consisting oF a stainless steel wire, is connected to the tip axle 15 by means of a clamp 17, and extends in towards the anchoring of the windmill blade for earthing.

The shown embodiment is particularly advantageous in connection with the subsequent mounting of a lightning arrester on a windmill blade 1, in that the existing installations can easily be utilized or replaced.

The lightning conductor 4'' itself can thus easily be mounted, in that this merely requires to be mounted instead of a closing plug which sits in the same place on an existing blade.

## Claims

1. Lightning arrester arrangement for mounting in a windmill blade of composite material, said arrangement consisting of an electrically-conducting material being connected to an earth connection, and the said connection comprising a metallic conductor (6, 15) which extends inside the blade (1, 1'), and which wholly or partly consists of a metal wire, **characterized in** that the lightning arrester comprises at least one conductor (4a, 4b, 4', 4") arranged in or in the vicinity of the tip of the blade and extending from the tip of the windmill blade and outwardly, and that the outwardly extending conductors are electrically connected to the metallic conductor (6) extending inside the blade with or without a cladding of insulation.

2. Lightning arrester arrangement according to claim 1, where the blade is provided with a rotatable tip which is mounted on a tip axle, **characterized in** that the tip axle (10) is made of a composite material and configured with a through-going cavity, and that the inner conductor (6) extends inside this cavity.

3. Lightning arrester arrangement according to claim 1, **characterized in** that the tip axle (15) is made of an electrically-conducting metal which functions as the inner conductor.

4. Lightning arrester arrangement according to claim 3, **characterized in** that the tip axle (15), upon subsequent mounting of the lightning arrester, is connected to a metal wire (6) which is inserted inside the blade (1) and functions as the inner conductor.

## Patentansprüche

1. Blitzableiteranordnung zur Anbringung in einem Windradblatt aus Verbundmaterial, wobei die Anordnung ein elektrisch leitendes Material aufweist, wobei das Material mit einer Erdverbindung verbunden ist und wobei die Verbindung einen metallischen Leiter (6, 15) aufweist, der sich innerhalb des Blattes (1, 1') erstreckt und der ganz oder teilweise aus einem Metalldraht besteht, dadurch gekennzeichnet, daß der Blitzableiter mindestens einen Leiter (4a, 4b, 4', 4") aufweist, der in oder in der Nähe der Spitze des Blattes angebracht ist, und der sich von der Spitze des Windradblattes und nach außen erstreckt, und daß die sich nach außen erstreckenden Leiter elektrisch mit dem metallischen Leiter (6) verbunden sind, der sich in dem Blatt mit oder ohne Isolationsummantelung erstreckt.

2. Blitzableiteranordnung nach Anspruch 1, wobei das Blatt mit einer drehbaren Spitze versehen ist, die auf einer Spitzenachse angebracht ist, dadurch gekennzeichnet, daß die Spitzenachse (10) aus einem Verbundmaterial hergestellt und mit einer durchgehenden Aushöhlung ausgestaltet ist und daß sich der innere Leiter (6) innerhalb dieser Aushöhlung erstreckt.

3. Blitzableiteranordnung nach Anspruch 1, dadurch gekennzeichnet, daß die Spitzenachse (15) aus einem elektrisch leitenden Metall hergestellt ist, das als der innere Leiter wirkt.

4. Blitzableiteranordnung nach Anspruch 3, dadurch gekennzeichnet, daß die Spitzenachse (15) nach anschließender Anbringung des Blitzableiters mit einem Metalldraht (6) verbunden wird, der in das Blatt (1) eingefügt wird und als der innere Leiter wirkt.

## Revendications

1. Dispositif de paratonnerre pour le montage dans une pale d'éolienne de matériaux composites, ledit dispositif comprenant une matière conductrice d'électricité étant liée à une prise de terre, et ladite prise comprenant un conducteur métallique (6, 15) s'étendant à l'intérieur de la pale (1, 1') et se composant entièrement ou partiellement d'un fil métallique, caractérisé en ce que le paratonnerre comprend au moins un conducteur (4a, 4b, 4', 4") situé dans ou près de la pointe de la pale et s'étendant de la pointe de la pale d'éolienne et vers l'extérieur, et que les conducteurs s'étendant vers l'extérieur sont reliés électriquement au conducteur métallique (6) s'étendant à l'intérieur de la pale avec ou sans revêtement isolant.

2. Dispositif de paratonnerre selon la revendication 1, la pale étant prévue d'une pointe rotative qui est montée sur un arbre de pointe, caractérisé en ce que l'arbre de pointe (10) est fabriqué dans une matière composite et prévu d'une cavité traversante et que le conducteur intérieur (6) s'étend à l'intérieur de la cavité.

3. Dispositif de paratonnerre selon la revendication 1, caractérisé en ce que l'arbre de pointe (15) est fabriqué dans un métal conducteur d'électricité qui fonctionne comme le conducteur intérieur.

4. Dispositif de paratonnerre selon la revendication 3, caractérisé en ce que l'arbre de pointe (15) après le montage subséquent du paratonnerre, est relié à un fil métallique (6) qui est inséré à l'intérieur de la pale (1) et qui fonctionne comme le conducteur intérieur.
